# EUROPÄISCHE PATENTSCHRIFT

(11) **EP 0 439 639 B1**
(45) Veröffentlichungstag und Bekanntmachung des Hinweises auf die Patenterteilung: **15.09.1993**
(21) Anmeldenummer: 90101705.3
(22) Anmeldetag: 29.01.1990
(51) Int. Cl.: B02C 18/40, B02C 19/14, B09B 3/00

(54) **Verfahren zur Entsorgung von unter Druck stehenden Behältern**
Process for the disposal of pressurized containers
Procédé d'enlèvement de récipients sous pression

(43) Veröffentlichungstag der Anmeldung: 07.08.1991
(73) Patentinhaber: AGR Abfallentsorgungs-Gesellschaft Ruhrgebiet mit beschränkter Haftung, 45127 Essen (DE)
(72) Erfinder: Kohrs, Günter, D-4650 Gelsenkirchen (DE); Stadie, Klaus, D-4630 Bochum (DE)
(74) Vertreter: Vomberg, Friedhelm, Dipl.-Phys.

(56) Entgegenhaltungen:
- EP-A- 0 208 660
- EP-A- 0 287 935
- DE-A- 3 817 273
- US-A- 4 809 915

## Beschreibung

Die Erfindung betrifft ein Verfahren zur Entsorgung von unter Druck stehenden Behältern nach dem Oberbegriff des Anspruches 1.

Bei der Entsorgung von Spraydosen ist aus ökologischen Gründen darauf zu achten, daß möglichst wenig Deponieraum in Anspruch genommen wird und daß die Inhaltsstoffe nicht in die Luft oder in das Grundwasser entweichen können.

Zu diesem Zweck beschreibt die DE-OS 38 17 273 ein Verfahren und eine Vorrichtung zur Entsorgung von unter Druck stehenden Behältern. Die Vorrichtung besteht aus einem Druckbehälter, in dem eine Zerkleinerungsvorrichtung und eine Trennvorrichtung angeordnet sind. An dem Druckbehälter ist ein druckbeaufschlagbarer Auffangbehälter zur Aufnahme der Inhaltsstoffe der zu entsorgenden Behälter angesetzt. Die Entsorgung der Behälter erfolgt dadurch, daß man den Druckbehälter mit einem Überdruck an Inertgas beaufschlagt, die zu entsorgenden Behälter im Druckbehälter zerkleinert, die zerkleinerten Teile der Behälter im Überdruckbereich von den Inhaltsstoffen der Behälter trennt und die Inhaltsstoffe innerhalb des Überdruckbereiches auffängt. Auf diese Weise ist es jedoch nicht möglich, Druckbehälter zu entsorgen, die mit den Inhaltsstoffen für die Erzeugung von Schaumstoffen gefüllt sind.

Der Erfindung liegt daher die Aufgabe zugrunde, ein Verfahren zur Entsorgung von Druckbehältern zur Verfügung zu stellen, die mit den Ausgangsprodukten zur Bildung von Schaumstoffen gefüllt sind.

Diese Aufgabe wird gelöst durch ein Verfahren zur Entsorgung von unter Druck stehenden Behältern, die neben weiteren Inhaltsstoffen mit den Ausgangsmaterialien von Schaumstoffen gefüllt sind, wobei man die Behälter unter einem Überdruck von Inertgas zerkleinert, die zerkleinerten Teile der Behälter innerhalb des Überdruckbereiches von den Inhaltsstoffen trennt und die Inhaltsstoffe innerhalb des Überdruckbereiches auffängt und ggf. abtrennt, das dadurch gekennzeichnet ist, daß man während der Zerkleinerung der Behälter ein organisches Lösungsmittel aufsprüht.

Das erfindungsgemäße Verfahren eröffnet erstmals die Möglichkeit der umweltbewußten Entsorgung von Behältern, die die Ausgangsprodukte für die Bildung von Schaumstoffen enthalten, wie Polyurethan-, Polystyrol-, Polykondensat-, Silikon-, Epoxyharz-Schaumstoffe und dergleichen.

Das erfindungsgemäße Verfahren wird mit der in der DE-OS 38 17 273 beschriebenen Vorrichtung durchgeführt. Auf diese Publikation wird hiermit in vollem Umfang Bezug genommen.

Das erfindungsgemäße Verfahren erfolgt wie in dieser Publikation beschrieben, wobei man jedoch zusätzlich die Behälter während des Zerkleinerungsvorganges mit einem inerten Lösungsmittel besprüht. Das Lösungsmittel soll die Bildung der Schaumstoffe verhindern oder zumindest verzögern. Vorzugsweise soll das Lösungsmittel die Ausgangsstoffe lösen, ohne damit zu reagieren. Die Wahl eines geeigneten Lösungsmittels richtet sich nach den Inhaltsstoffen der zu entsorgenden Behälter, z.B. ist Aceton besonders geeignet bei der Entsorgung von Spraydosen für Polyurethanschäume.

Geeignete Lösungsmittel sind Retone, halogenierte Kohlenwasserstoffe, aliphatische oder aromatische Rohlenwasserstoffe und Mischungen davon.

Bevorzugte Lösungsmittel sind Methyläthylketon, Pyrrol, Pentan, Hexan, Toluol, Xylol und insbesondere Aceton oder Mischungen davon.

Es ist klar, daß für das erfindungsgemäße Verfahren auch Abfallösungsmittel und Lösungsmittelverschnitte, gebrauchte Lösungsmittel und dergleichen verwendet werden können.

Nach dem Zerkleinern der zu entsorgenden Behälter und dem Aufsprühen des Lösungsmittels und Trennen der Behälterteile und der Inhaltsstoffe wird es in der Regel so sein, daß die in dem Lösungsmittel vorliegenden Ausgangsprodukte für die Schaumstoffe auspolymerisieren. Das dabei entstehende Polymerisat kann der Sondermüllverwertung oder einer anderen Verwertung zugeführt werden.

Die Erfindung wird nachfolgend anhand der Zeichnungen und eines Ausführungsbeispieles erläutert. Es zeigen
- Fig. 1: eine schematische Darstellung der erfindungsgemäßen Vorrichtung in einer Seitenansicht und
- Fig. 2: dieselbe Vorrichtung in einer Vorderansicht.

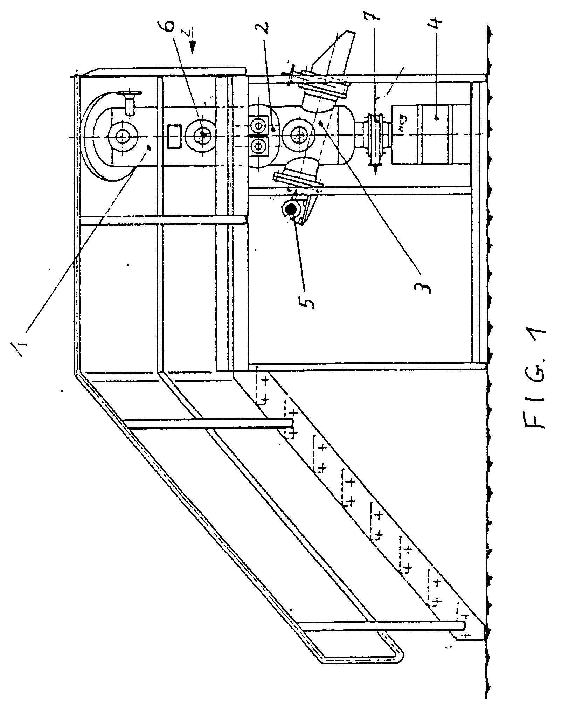

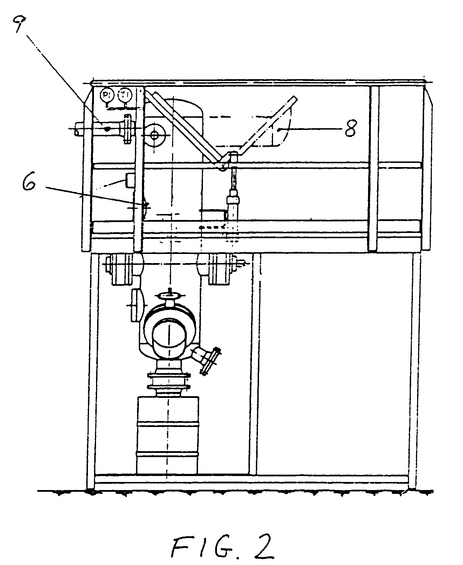

Die in Fig. 1 und 2 dargestellte Anlage besteht im wesentlichen aus einem mit einer Klappe 8 druckdicht verschließbaren Druckbehälter 1, der bodenseitig eine Zerkleinerungsvorrichtung 2 und eine darunterliegende Trennvorrichtung 3 aufweist. Als Zerkleinerungsvorrichtung 2 dient ein langsam laufendes Schneidwerkzeug, z.B. aus gegenläufig angetriebenen Wellen, die parallel zueinander angeordnet sind und radial abstehende Schneidscheiben und/oder -zähne aufweisen. Die Abstände der Wellen und der Schneidscheiben bzw. -zähne sind auf die Größe der zu entsorgenden Behälter abgestimmt, ggf. auch einstellbar.

Die Trennvorrichtung 3 besteht aus einem pneumatisch über den Antrieb 5 mit Inertgas angetriebenen Schwingsieb. Unterhalb der Trennvorrichtung 3 und mittels einer Kupplung 7 an den Druckbehälter 1 anschließbar ist ein Auffangbehälter 4 angeordnet, der mittels eines Hubtisches vertikal bewegbar ist.

Oberhalb der Zerkleinerungsvorrichtung 2 sind Sprühdüsen 6 vorgesehen, durch die ein inertes Lösungsmittel während der Zerkleinerung der Behälter aufgesprüht werden kann.

An den oberen Bereich des Druckbehälters 1 ist ein Pufferbehälter 9 angeflanscht, über den Inertgas dem Druckbehälter zugeführt und die gasförmigen Bestandteile nach Zerkleinerung der Behälter über eine nicht dargestellte Evakuierungspumpe abgezogen werden können.

Die Anlage wird folgendermaßen betrieben:

Zunächst werden bei geöffneter Klappe 8 die zu entsorgenden Behälter, z.B. Spraydosen, in den Druckbehälter 1 eingegeben. Anschließend wird dem Druckbehälter ein Inertgas zugeführt und ein Druck eingestellt, der über dem Innendruck der Spraydosen liegt. Das Inertgas soll in erster Linie explosive Reaktionen verhindern. Während der Zerkleinerung der zu entsorgenden Behälter durch die Zerkleinerungsvorrichtung wird durch die Düse 6 ein inertes Lösungsmittel, z.B. Aceton, auf die Behälter aufgesprüht. Durch die Zerkleinerungseinrichtung werden die Spraydosen aufgebrochen und deren Inhaltsstoffe freigesetzt. Durch die im Druckbehälter bestehenden Druckverhältnisse (der Druck ist mindestens so hoch wie der Innendruck der Spraydosen) von vorzugsweise einer unteren Druckgrenze von 3, 4 oder 5 bar bis hin zu einer Obergrenze zwischen 10 bar und 15 bar wird gewährleistet, daß die Inhaltsstoffe der unter Druck stehenden Behälter flüssig bleiben, also nach unten abfließen und dort abgezogen werden können. Bis auf einen vernachlässigbaren Restdampfdruck bleibt demnach auch die Inertgasatmosphäre im Druckkessel erhalten. Die Zerkleinerungsvorrichtung wird mit einer Geschwindigkeit betrieben, bei der keine merkliche Temperaturerhöhung durch das Zerschneiden bzw. Aufschneiden der Dosen auftritt.

Ist eine Charge bearbeitet, wird das Inertgas in den Pufferbehälter abgepumpt, eine neue Charge eingefüllt und das Inertgas wieder über ein Kompressorsystem in den Druckbehälter eingelassen, bevor die unter Druck stehenden Behälter aufgeschnitten werden.

Alternativ hierzu ist es möglich, statt des Pufferspeichers eine Abgasreinigungsanlage vorzusehen, die beispielsweise aus einem Aktivkohlefilter und nachgeschalteten Molekularsieben besteht. Eine weitere Möglichkeit wäre die Nachschaltung einer Kühlfalle.

## Patentansprüche

1. Verfahren zur Entsorgung von unter Druck stehenden Behältern, die neben weiteren Inhaltsstoffen auch mit den Ausgangsmaterialien von Schaumstoffen gefüllt sind, wobei man die Behälter unter einem Überdruck von Inertgas zerkleinert, die zerkleinerten Teile der Behälter innerhalb des Überdruckbereiches von den Inhaltsstoffen trennt und die Inhaltsstoffe innerhalb des Überdruckbereiches auffängt und gegebenenfalls abtrennt,
**dadurch gekennzeichnet**,
daß man während der Zerkleinerung der Behälter ein organisches Lösungsmittel aufsprüht.

2. Verfahren nach Anspruch 1, dadurch gekennzeichnet, daß man ein Lösungsmittel verwendet, das ausgewählt ist unter Ketonen, halogenierten Kohlenwasserstoffen, aliphatischen oder arotischen Kohlenwasserstoffen und Mischungen davon.

3. Verfahren nach Anspruch 2, dadurch gekennzeichnet, daß man als Lösungsmittel Aceton, Methyläthylketon, Pyrrol, Pentan, Hexan, Toluol, Xylol oder Mischungen davon verwendet.

4. Verfahren nach einem der Ansprüche 1 bis 3, dadurch gekennzeichnet, daß als Inertgas Stickstoff, Kohlensäure oder Helium verwendet wird.

5. Verfahren nach einem der Ansprüche 1 bis 4, dadurch gekennzeichnet, daß man den Überdruck geringfügig über den Innendruck der Behälter einstellt.

6. Verfahren nach Anspruch 1 bis 5, dadurch gekennzeichnet, daß der Überdruck mindestens auf den Verflüssigungsdruck von vorhandenen gasförmigen Inhaltsstoffen, z.B. Treibgasen, einstellbar ist.

7. Verfahren nach einem der Ansprüche 1 bis 6, dadurch gekennzeichnet, daß vor Beginn der Zerkleinerung mindestens eine Spülung mit Inertgas bis unter die Explosionsgrenze der Inhaltsstoffe erfolgt.

8. Verfahren nach einem der Ansprüche 1 bis 7, dadurch gekennzeichnet, daß die flüssigen Inhaltsstoffe durch Eindüsen in einen Verbrennungsofen beseitigt werden.

9. Verfahren nach einem der Ansprüche 1 bis 7, dadurch gekennzeichnet, daß vorhandene Treibgase von den übrigen Inhaltsstoffen abgetrennt und zur Wiederverwendung gesammelt werden.

## Claims

1. Process for the disposal of pressurised containers, which in addition to other contents are also filled with the base constituents of foamed materials, wherein the containers are crushed under an over-pressure from inert gas, the crushed parts of the containers are separated from the contents within the over-pressure range and the contents are collected within the over-pressure range and possibly separated off, characterised in that an organic solvent is sprayed while the containers are being crushed.

2. Process according to Claim 1, characterised in that the solvent used is one selected from ketones, halogenated hydrocarbons, aliphatic or aromatic hydrocarbons and mixtures thereof.

3. Process according to Claim 2, characterised in that the solvent used is acetone, methyl ethyl ketone, pyrrole, pentane, hexane, toluol, xylol or mixtures thereof.

4. Process according to one of Claims 1 to 3, characterised in that nitrogen, carbon dioxide or helium is used as inert gas.

5. Process according to one of Claims 1 to 4, characterised in that the over-pressure is adjusted to slightly above the internal pressure of the containers.

6. Process according to Claims 1 to 5, characterised in that the over-pressure is at least adjustable to the liquefying pressure of the gaseous contents present, e.g. propellants.

7. Process according to one of Claims 1 to 6, characterised in that before crushing commences, flushing with inert gas to below the explosion limit of the contents occurs at least once.

8. Process according to one of Claims 1 to 7, characterised in that the liquid contents are removed through nozzles feeding into an incinerator.

9. Process according to one of Claims 1 to 7, characterised in that any propellants present are separated from the other contents and collected for recycling.

## Revendications

1. Procédé d'enlèvement de réservoirs sous pression qui, à côté d'autres substances, contiennent des matières premières pour la production de mousses synthétiques, selon lequel on désintègre lesdits récipients au moyen d'un gaz inerte sous pression, on sépare les parties désintégrées des récipients dans le domaine de surpression, des matières incorporées et on recueille et, le cas échéant, on sépare, lesdites matières, caractérisé en ce que, pendant la désintégration, on projette un solvant organique.

2. Procédé selon la revendication 1, caractérisé en ce que l'on utilise un solvant choisi dans le groupe comprenant les cétones, les hydrocarbures halogénés, les hydrocarbures aliphatiques ou aromatiques et leurs mélanges.

3. Procédé selon la revendication 2, caractérisé en ce qu'on utilise comme solvant l'acétone, le méthyl-éthyl-cétone, le pyrrol, le pentane, l'hexane, le toluol, le xylol ou leurs mélanges.

4. Procédé selon l'une quelconque des revendications 1 à 3, caractérisé en ce qu'on utilise comme gaz inerte l'azote, le gaz carbonique ou l'hélium.

5. Procédé selon l'une quelconque des revendications 1 à 4, caractérisé en ce qu'on règle la surpression à une valeur légèrement supérieure à la pression interne du récipient.

6. Procédé selon l'une quelconque des revendications 1 à 5, caractérisé en ce que la surpression est réglable, au moins à une valeur égale à la pression de liquéfaction des matières étrangères gazeuses présentes, par exemple, à celle des gaz de propulsion.

7. Procédé selon l'une quelconque des revendications 1 à 6, caractérisé en ce que, avant de commencer la désintégration, on procède à un arrosage avec un gaz inerte jusqu'au-dessous de la limite d'explosion des matières inertes.

8. Procédé selon l'une quelconque des revendications 1 à 7, caractérisé en ce qu'on élimine les composants fluides en les injectant dans un four de combustion.

9. Procédé selon l'une quelconque des revendications 1 à 7, caractérisé en ce qu'on sépare les gaz de propulsion contenus dans les autres composants présents et on les recueille aux fins de réutilisation.
